## Europäisches Patentamt
## European Patent Office
## Office européen des brevets

(19)

(11) Publication number: **0 319 578**

A1

# EUROPEAN PATENT APPLICATION

published in accordance with Art. 158(3) EPC

(21) Application number: 87902764.7

(22) Date of filing: 07.05.87

Data of the international application taken as a basis:

(86) International application number:
PCT/JP87/00280

(87) International publication number:
WO87/06924 (19.11.87 87/25)

(51) Int. Cl.³: **C 01 B 33/24**
C 04 B 28/18, D 01 F 9/08

(30) Priority: 07.05.86 JP 104480/86

(43) Date of publication of application:
14.06.89 Bulletin 89/24

(84) Designated Contracting States:
BE DE FR GB IT NL

(71) Applicant: JAPAN represented by PRESIDENT OF TOHOKU UNIVERSITY
11, Katahira 2-chome
Sendai-shi Miyagi-ken 980-91(JP)

(71) Applicant: ONODA ALC CO. LTD.
4-12, Meieki 4-chome Nakamura-ku Nagoya-shi
Aichi-ken 450(JP)

(72) Inventor: TAKAHASHI, Hideaki
30-11, Kongosawa 1-chome Sendai-shi
Miyagi-ken 982(JP)

(72) Inventor: SHOJI, Tetsuo
21-3, Yamate-cho Sendai-shi
Miyagi-ken 980-91(JP)

(72) Inventor: TERAMURA, Satoshi
4-3-2-802, Takasu Chiba-shi
Chiba-ken 260(JP)

(74) Representative: Popp, Eugen, Dr. et al,
MEISSNER, BOLTE & PARTNER Widenmayerstrasse 48
Postfach 86 06 24
D-8000 München 86(DE)

(54) PROCESS FOR PRODUCING XONOTLITE FIBERS.

(57) A process for producing long fibers of xonotlite which is calcium silicate crystal. This process comprises introducing a starting material capable of releasing calcium in an aqueous solution and a starting material capable of releasing silica in an aqueous solution, or a starting material capable of releasing both calcium and silica in an aqueous solution into a continuously operated hydrothermal reactor, and forming xonotlite in one step under given conditions without intermediate formation of C-S-H and tobamolite to thereby obtain xonotlite fibers of uniform quality, having an aspect ratio of at least 20, a shortest fiber length of 50 μm and an average fiber length of at least 100 μm.

F I G. 1

— 1 —

S P E C I F I C A T I O N

## Method of Manufacturing Xonotlite Fiber

[Technical Field]

The present invention relates to a method of manufacturing long fiber xonotlite.

[Background Art]

Asbestos and glass fibers are conventional inorganic fibers. However, the former fiber material is toxic for health, and the latter one cannot be used at high temperatures of 500°C or more and in alkaline conditions. To the contrary, xonotlite can withstand high temperatures of up to 800°C, and has an anti-alkaline property and a fibrous form. Properties required for inorganic fibers are given as follows. An inorganic fiber has uniform quality, a fiber length of 100 μm or more and an aspect ratio of 20 or more.

The following techniques are known as conventional techniques. Japanese Patent Publication No. 53-12526 discloses a technique wherein calcium silicate having a fiber length of 1 to 20 μm and an aspect ratio of 20 is used to manufacture a molding having a sufficiently high strength by simply molding and drying a calcium silicate crystal. Japanese Patent unexamined published application No. 54-134095 discloses a method wherein KOH is added to a slurry having a molar ratio of a calcium component to a silica component of 0.6 to 1.2 and allows to react therewith for 5 to 10 days when tobermorite having a fiber length of 100 to 200 μm is synthesized by a batch method. Japanese Patent unexamined published application No. 55-20291 discloses a method of manufacturing a fine-fibrous tricalcium silicate dihydrate having an average fiber length of 85 μm and an aspect ratio of 500 or more according to a batch method. However, these methods have problems of productivity because they are batch methods. In addition, even if long fibers are obtained, they have nonuniform quality and cannot be applied for industrial use. Although a continuous manufacturing method has an advantage over the batch method on the industrial basis, a method for manufacturing of long fiber xonotlite according to a continuous manufacturing process has not yet been established. A method of continuously manufacturing process of xonotlite is known as per Japanese Patent Publication No. 52-29279. According to this method, two-stage autoclave is used. In the first stage autoclave, a get of an amorphous calcium silicate hydrate (to be referred to as a C-S-H hereinafter and in the appended claims) is produced, and then xonotlite is produced using said gel in the second-stage. However, the resultant xonotlite fiber had a length of about 10 μm and an aspect ratio of 20. Japanese Patent Publication No. 54-10957 discloses a method of manufacturing long xonotlite and tobermorite fibers. According to this method, a starting material (hereinafter to be referred to as material) slurry is prepared beforehand to obtain a Ca/Si mol. ratio equal to that of a calcium silicate hydrate to be prepared, and heated at 50 to 100°C so that the slurry contains 50% or more of a C-S-H gel. The C-S-H gel is then heated from 90°C to 160°C within 5 minutes to manufacture xonotlite with a retention time of 0.5 to 4 hours. However, the length of the resultant fiber was 12 to 15 μm, and its aspect ratio was 40.

As described above, the conventional methods of manufacturing xonotlite do not disclose various conditions for continuously manufacturing long fibers.

[Disclosure of Invention]

The present invention is to provide a uniform, high-quality xonotlite fiber having a large length and a large aspect ratio.

The present invention is a method comprising charging material capable of dissolving calcium in an aqueous solution and material capable of dissolving silica in an aqueous solution, or material capable of dissolving both calcium and silica in an aqueous solution, in a continuous hydrothermal reaction vessel, performing a hydrothermal reaction of the material in the vessel in stable conditions which allow direct production of xonotlite to obtain a xonotlite fiber having a minimum fiber length of 50 μm or more, an average fiber length of 100 μm or more and an aspect ratio of 20 or more.

The above method can be embodied as follows. The material in form of a slurry or an aqueous solution is heated in the continuous hydrothermal reaction vessel to obtain xonotlite stable conditions before the C-S-H nucleus reaches critical size. In another embodiment, the material as a solid material, a slurry, or an aqueous solution is charged and reacted in a continuous hydrothermal reaction vessel which is held in stable conditions for xonotlite beforehand.

The continuous hydrothermal reaction vessel is defined as a vessel designed such that a material can be continuously charged in the vessel, a hydrothermal reaction occurs in the vessel and a reaction product is continuously discharged from the vessel.

According to the present invention, a xonotlite long fiber can be manufactured by a continuous production system which is industrially advantageous. In addition, the resultant xonotlite long fiber has a minimum fiber length of 50 μm or more, an average fiber length of 100 μm or more and an aspect ratio of 20 or more, that is, the resultant fiber can satisfy a uniform quality condition required as an inorganic fiber. Furthermore, according to the present invention, a material to be used is not limited to a material having high purity. If a material allows elution of calcium in an aqueous solution or a material allows elution of silica in an aqueous solution, it can be used in specific conditions, resulting in convenience. According to the present invention, xonotlite is produced directly from the material without being through a C-S-H or tobermorite. Unlike in the conventional method, an intermediate product is not mixed in the resultant xonotlite, thereby producing a high-purity xonotlite long fiber.

[Brief Description of the Drawings]

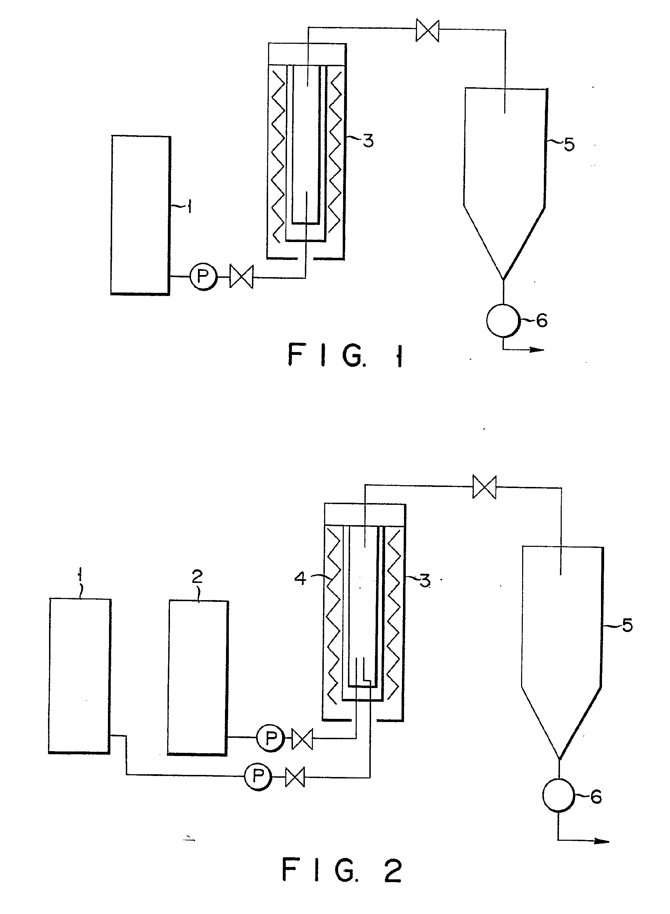

Figs. 1 to 4 are schematic views showing apparatuses used in preferred embodiments of the present invention, respectively.

[Best Mode of Carrying out the Invention]

The present invention will be described in detail hereinafter.

The present invention has a characteristic operational feature that xonotlite can be substantially directly precipitated from a material without being through a C-S-H or tobermorite by using calcium and silica of the material in a continuous hydrothermal reaction vessel. A conventional method of manufacturing a calcium silicate fiber is as follows. Calcium and silica components of the material are adjusted to a Ca/Si ratio of calcium silicate to be prepared by a batch or continuous method, and compressed and heated to produce a C-S-H, and the C-S-H is converted into tobermorite and then into xonotlite. Xonotlite is finally obtained by this conventional method. However, since "CSH" and tobermorite are produced during the reaction, a crystal size of the resultant xonotlite is limited by those of the C-S-H and tobermorite, or the C-S-H and the tobermorite are left as metastable components.

Therefore, xonotlite synthesis time is prolonged, and the intermediate products are mixed in the finished product, resulting in inconvenience.

The materials used in the present invention are basically a calcium material and a silica material. The calcium material is not limited to a specific one if calcium can be dissolved in an aqueous solution. Examples of the calcium material are a suisanka calcium, calcium carbonate, and calcium oxide. Examples of the material capable of dissolving silica in an aqueous solution are silica, quartz, amorphous silica, cristobalite, diatomite, and glass. Examples of the material capable of dissolving both calcium and silica are granite, fly ash, and a blast furnace slug. These materials are used in the form of a slurry or aqueous solution in a reaction. A material concentration is up to 1%. If the material concentration exceeds 1%, an supersaturation atmosphere occurs, and it is difficult to produce long fibers. The Ca/Si ratio in the material varies depending on a material used, a temperature, a temperature rise rate, a pressure, and other conditions, but generally falls within the range of 0.5 to 10 to produce xonotlite. A Ca/Si ratio of the material such as granite or fly ash capable of dissolving both calcium and silica is limited up to 0.05. Xonotlite can be precipitated in such a wide range of the Ca/Si ratio due to the following reasons. First, the solubility of calcium is close to that of silica at about 250°C, and the Ca/Si ratio of the solution is about 1. Second, only calcium and silica which are required for producing xonotlite are consumed, and an excessive component is extracted as an aqueous solution or precipitated in conditions different from those of xonotlite. The above materials are charged in a continuous hydrothermal reaction vessel. The continuous hydrothermal reaction vessel is exemplified in Fig. 1. Referring to Fig. 1, reference numeral 1 denotes a material tank. A material capable of dissolving calcium in an aqueous solution and a material capable of dissolving silica in an aqueous solution are mixed, and the resultant mixture is charged in material tank 1. These materials are converted into an aqueous solution or slurry in the tank. The slurry or aqueous solution is supplied to autoclave 3 (the continuous hydrothermal reaction vessel) by a high-pressure pump. Heater 4 is mounted on autoclave 3 to heat the material mixture while the mixture is kept in a fluid state therein. It is possible to change a flow rate of the material solution and performance of the heater to arbitrarily adjust the temperature rise rate of the material solution, so that the materials are reacted with each other to directly produce xonotlite from the material mixture. A solution containing a reaction product is discharged from autoclave 3 and temporarily supplied to storage tank 5. The reaction product is filtered by filter 6 according to a conventional filtering method such as vacuum filtering or press filtering. In the above process, the materials are compressed and heated in the xonotlite stable conditions and are reacted with each other to produce xonotlite long fibers. The xonotlite stable conditions vary according to types of material, a pressure, and a system composition (including pH) but can be defined as pressure and temperature conditions for directly precipitating xonotlite from the materials without being through the C-S-H and tobermorite. In this case, the preset temperature is 120°C or more since a temperature boundary of an equilibrium condition of tobermorite and xonotlite is 120°C. The preset temperature is preferably 160°C or more. Moreover, the preset temperature can be 180°C or more under the normal industrial conditions, i.e., if silica and quick lime (calcium oxide) are used as materials, and furthermore if reaction time is given as 5 hours. The boundary of the temperature condition will not be changed by variations in pressure if a pressure is 500 atm or less.

There are roughly two methods of manufacturing xonotlite in the xonotlite stable conditions. According to the first method, the premixed materials are charged in the heating vessel and compressed and heated to obtain the xonotlite stable conditions before a duration required for reaction and production of the C-S-H has elapsed, i.e., before a critical nucleus size of the C-S-H is reached. In other words, crystal growth of xonotlite is accelerated prior to crystal growth of the C-S-H and the tobermorite. When the materials are mixed and heated and a temperature reaches a predetermined temperature, C-S-H crystal nuclei are produced. If such a crystal nucleus is smaller than the critical size, reversible reactions, i.e., production and decomposition of the nucleus occur, and no crystals are formed. The critical nucleus size condition cannot be solely determined. However, in fine, this condition is determined by the degree of supersaturation having factors such as a temperature and a concentration. In general, it takes a long period of time to exceed a critical size at a higher temperature and in a lower concentration. It is preferable to set a time-temperature curve which passes an supersaturation condition as low as possible. For this reason, the lower limit of the temperature rise rate is given as 100°C/hour. Any rate higher than this lower limit is given as a temperature rise rate. The higher the temperature rise rate becomes, the better the results are obtained.

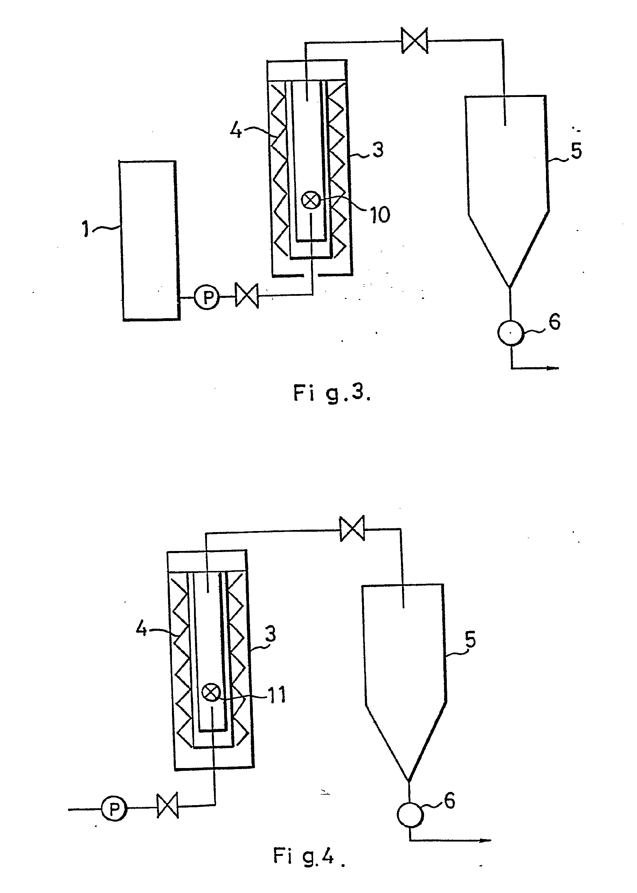

According to the second method of obtaining the xonotlite stable conditions, both the calcium material and the silica material are charged in an autoclave under the xonotlite stable conditions and are mixed therein. Xonotlite long fibers are produced directly from the material mixture. In this case, the xonotlite stable conditions are the same as those of the first method. The second method of mixing the calcium and silica materials under the xonotlite stable conditions are classified into the following three processes. According to the first process, as shown in Fig. 2, two materials are separately charged from two systems to the reaction vessel in the form of a slurry or aqueous solution and are mixed in the reaction vessel. Referring to Fig. 2, reference numerals 1 and 2 denote calcium and silica material tanks. According to the second process, as shown in Fig. 3, a solid silica material as one material is placed in a reaction vessel, and calcium as the other material is charged in the reaction vessel in the form of a slurry or aqueous solution and is reacted with silica. Referring to Fig. 3, reference numeral 10 denotes a silica material suspended in the autoclave. Contrary to the above procedure, if a solid calcium material is placed in a reaction vessel, and silica as the other material is charged in the form of a slurry or aqueous solution, crystals are produced on the calcium material to undesirably interfere silica elution. According to the third process, material 11 capable of dissolving both calcium and silica is suspenededed in the reaction vessel, as shown in Fig. 4. The resultant xonotlite is filtered in the same manner as in Fig. 1. Water can be re-circulated in the reaction system.

The present invention will be described in detail by way of its examples.

Example 1

AEROGIL (Tradename) available from Nippon Aerogil Sha was used as a silica material, and slaked lime was used as a calcium material, and these materials were mixed to prepare an aqueous solution having a concentration of 0.01 wt%. A Ca/Si ratio of the resultant mixture was set to be 1. The material solution was supplied to the apparatus shown in Fig. 1 and heated and compressed to perform a hydrothermal reaction. The inner diameter of the autoclave was 130 mm, and its length (height) was 1,000 mm. The material was supplied at a rate of 2 ℓ/hour, a temperature rise rate was 200°C/hour, a maximum pressure was 150 kg/cm$^2$, and a maximum temperature was 340°C. Precipitation of xonotlite was started at 170°C, 50 minutes after the solution was charged in the autoclave. Xonotlite fibers having a minimum fiber length of 50 μm, an average fiber length of 150 μm, a maximum fiber length of 300 μm, and an aspect ratio of 80 were obtained.

Example 2

A solution obtained by dissolving silica with hot water was used as a silica material, and a solution obtained by dissolving calcium carbonate with water having room temperature was used as a calcium material. A mixture of these materials had a Ca/Si ratio of 1. The resultant material solution was mixed in the apparatus shown in Fig. 2 at 300°C and was heated and compressed to perform a reaction. The inner diameter of the autoclave was 130 mm, and its length (height) was 1,000 mm. The solution was supplied at a rate of 2 ℓ/hour, a pressure was 150 kg/cm$^2$, and a maximum temperature was 340°C. Precipitation of xonotlite was started in the autoclave at 320°C. Xonotlite fibers having a minimum fiber length of 100 μm, an average fiber length of 300 μm, a maximum fiber length of 500 μm, and an aspect ratio of 100 were obtained.

Example 3

Silica as one material was put into a mesh-like container and was suspended at an autoclave position corresponding to 280°C, as shown Fig. 3. A slaked lime slurry as the other material was supplied to silica at a rate of 4 ℓ/hour. A slaked lime concentration of the slurry was 0.1 wt%. The Ca/Si ratio of the solution was not controlled to a specific value. A pressure was 150 kg/cm$^2$, and a maximum temperature was 340°C. Precipitation of xonotlite was started in an autoclave portion corresponding to 300°C or more. Xonotlite fibers having a minimum fiber length of 50 µm, an average fiber length of 1,000 µm, a maximum fiber length of 2,000 µm, and an aspect ratio of 100 were obtained.

Example 4

Granite was used as a material capable of dissolving both silica and calcium. Granite was suspended at a position corresponding to 300°C in an autoclave having an inner diameter of 40 mm and a length of 500 mm, as shown in Fig. 4. Water was supplied to granite at a rate of 10 ℓ/hour. A Ca/Si ratio of this material was 0.05. A maximum pressure was 170 kg/cm$^2$, and a maximum temperature was 350°C. Precipitation of xonotlite was started in an autoclave portion corresponding to 340°C or more. Xonotlite fibers having a minimum fiber length of 1,500 µm, an average fiber length of 2,000 µm, a maximum fiber length of 3,000 µm, and an aspect ratio of 100 were obtained.

Example 5

Fly ash was used as a material capable of dissolving both silica and calcium. Fly ash was suspended at a position corresponding to 280°C in an autoclave having an inner diameter of 130 mm and a length of 1,000 mm, as shown in Fig. 4. Water was supplied to fly ash at a rate of 4 ℓ/hour. A Ca/Si ratio of the material was 0.1. A maximum pressure was 150 kg/cm2, and a maximum temperature was 340°C. Precipitation of xonotlite was started in an autoclave portion corresponding to 300°C or more. Xonotlite fibers having a minimum fiber length of 50 µm, an average fiber length of 100 µm, a maximum fiber length of 200 µm, and an aspect ratio of 50 were obtained.

CLAIMS

1. A method of manufacturing a xonotlite fiber, comprising the steps of:

preparing a material capable of dissolving calcium in an aqueous solution and a material capable of dissolving silica in an aqueous solution;

charging the materials in a continuous hydrothermal reaction vessel and performing a hydrothermal reaction of the materials in stable conditions for directly producing xonotlite to obtain xonotlite fibers having a minimum fiber length of not less than 50 μm, an average fiber length of not less than 100 μm, and an aspect ratio of not less than 20.

2. A method of manufacturing a xonotlite fiber according to claim 1, further comprising the step of filtering and separating the xonotlite fibers obtained in the hydrothermal reaction step.

3. A method of manufacturing a xonotlite fiber according to claim 1, wherein the material capable of dissolving calcium in the aqueous solution is at least one material selected from the group consisting of calcium hydroxide, calcium carbonate, and calcium oxide, and the material capable of dissolving silica in the aqueous solution is at least one material selected from the group consisting of quartz, amorphous silica, cristobalite, diatomite, and glass.

4. A method of manufacturing a xonotlite fiber according to claim 1, wherein the materials are reacted in the form of a slurry or aqueous solution, and a concentration thereof is not more than 1%.

5. A method of manufacturing a xonotlite fiber according to claim 1, wherein a Ca/Si ratio of the materials during the reaction falls within a range of 0.5 to 10.

6. A method of manufacturing a xonotlite fiber according to claim 1, comprising the steps of:

preparing the material capable of dissolving calcium in the aqueous solution and the material capable of dissolving silica in the aqueous solution each in the form of a slurry or aqueous solution;

charging the materials in the continuous hydrothermal reaction vessel; and

heating and compressing the continuous hydrothermal reaction vessel charged with the materials such that a C-S-H reaches stable conditions for producing xonotlite within a period of time which allows the C-S-H particle size to reach a critical nucleus size, thereby performing the hydrothermal reaction to cause the materials to react with each other in the xonotlite stable conditions, and continuously obtaining the xonotlite fibers.

7. A method of manufacturing a xonotlite fiber according to claim 1, comprising:

heating and compressing the continuous hydrothermal reaction vessel beforehand to maintain the continuous hydrothermal reaction vessel in stable conditions for producing xonotlite; and

charging the material capable of dissolving calcium in the aqueous solution and the material capable of dissolving silica in the aqueous solution each in the form of a slurry or an aqueous solution, and performing the hydrothermal reaction to cause the materials to react with each other, thereby continuously obtaining the xonotlite fibers.

8. A method of manufacturing a xonotlite fiber according to claim 1, wherein the continuous hydrothermal reaction vessel is heated to not less than 120°C to cause to the hydrothermal reaction of the materials in the continuous hydrothermal reaction vessel.

9. A method of manufacturing a xonotlite fiber according to claim 8, wherein the temperature of the continuous hydrothermal reaction vessel is not less than 160°C.

10. A method of manufacturing a xonotlite fiber according to claim 1, wherein the material capable of dissolving silica is silica, the material capable of dissolving calcium is quick lime, and a reaction temperature is not less than 180°C.

11. A method of manufacturing a xonotlite fiber according to claim 6, wherein a temperature rise rate is not less than 100°C/hour.

12. A method of manufacturing a xonotlite fiber according to claim 7, wherein the material capable of dissolving calcium and the material capable of dissolving silica are prepared each as a slurry or an aqueous solution, and the materials are supplied to the continuous hydrothermal reaction vessel from separate systems.

13. A method of manufacturing a xonotlite fiber according to claim 7, wherein the material capable of dissolving calcium is placed in the continuous hydrothermal reaction vessel in a solid form, and the material capable of dissolving calcium is supplied to the continuous hydrothermal reaction vessel in the form of an aqueous solution.

14. A method of manufacturing a xonotlite fiber according to claim 1, wherein the continuous hydrothermal reaction vessel comprises an autoclave with a heating unit.

15. A method of manufacturing a xonotlite fiber, comprising the steps of:

preparing a material capable of dissolving both calcium and silica in an aqueous solution; and

charging the materials in a continuous hydrothermal reaction vessel to cause the materials to react with each other in a hydrothermal reaction under stable conditions for directly producing xonotlite, thereby continuously obtaining xonotlite fibers having a minimum fiber length of not less than 50 μm, an average fiber length of not less than 100 μm, and an aspect ratio of not less than 20.

16. A method of manufacturing a xonotlite fiber according to claim 15, further including the step of filtering and separating the xonotlite fibers obtained in the hydrothermal reaction step.

17. A method of manufacturing a xonotlite fiber according to claim 15, wherein the material capable of dissolving both calcium and silica in the aqueous solution is at least one material selected from the group consisting of granite, fly ash, and a blast furnace slug.

18. A method of manufacturing a xonotlite fiber according to claim 15, wherein the material is reacted in the form of a slurry or aqueous solution, and a concentration thereof is not more than 1%.

19. A method of manufacturing a xonotlite fiber according to claim 15, wherein a Ca/Si ratio of the material during the reaction falls within a range of 0.5 to 10.

20. A method of manufacturing a xonotlite fiber according to claim 15, wherein the material capable of dissolving both calcium and silica is at least one material selected from the group consisting of granite and fly ash, and a Ca/Si ratio during the reaction falls within a range of 0.05 to 10.

21. A method of manufacturing a xonotlite fiber according to claim 15, comprising the steps of:

preparing the material capable of dissolving both calcium and silica in the aqueous solution in the form of a slurry or aqueous solution;

charging the material in the continuous hydrothermal reaction vessel; and

heating and compressing the continuous hydrothermal reaction vessel charged with the material to obtain stable conditions for producing xonotlite before a C-S-H reaches a critical nucleus size, thereby performing the hydrothermal reaction of the material in the xonotlite stable conditions, and continuously producing the xonotlite fibers.

22. A method of manufacturing a xonotlite fiber according to claim 15, comprising the steps of:

heating and compressing the continuous hydrothermal reaction vessel to maintain the continuous hydrothermal reaction vessel in the xonotlite stable conditions; and

charging the material capable of dissolving both calcium and silica to the continuous hydrothermal reaction vessel under the xonotlite stable conditions in the form of a slurry or aqueous solution, thereby performing the hydrothermal reaction of the material, and continuously obtaining the xonotlite fibers.

23. A method of manufacturing a xonotlite fiber according to claim 15, wherein the continuous hydrothermal reaction vessel is heated to a temperature of not less than 120°C to cause the hydrothermal reaction of the material.

24. A method of manufacturing a xonotlite fiber according to claim 23, wherein the temperature of the continuous hydrothermal reaction vessel is not less than 160°C.

25. A method of manufacturing a xonotlite fiber according to claim 21, wherein a temperature rise rate is not less than 100°C/hour.

26. A method of manufacturing a xonotlite fiber according to claim 22, comprising the steps of:

placing a solid material capable of dissolving both calcium and silica in a hydrothermal reaction vessel;

heating and compressing the hydrothermal reaction vessel to maintain the hydrothermal reaction vessel in stable conditions for producing xonotlite; and

supplying water to the reaction vessel to cause elution of calcium and silica and the hydrothermal reaction, thereby continuously obtaining the xonotlite fibers.

27. A method of manufacturing a xonotlite fiber according to claim 15, wherein the hydrothermal reaction vessel comprises an autoclave with a heating unit.

1/2

F I G. 1

F I G. 2

Fi g.3.

Fi g.4.

# INTERNATIONAL SEARCH REPORT

International Application No PCT/JP87/00280

## I. CLASSIFICATION OF SUBJECT MATTER (if several classification symbols apply, indicate all) 3

According to International Patent Classification (IPC) or to both National Classification and IPC

Int.Cl$^4$    C01B33/24, C04B28/18, D01F9/08

## II. FIELDS SEARCHED

Minimum Documentation Searched 4

| Classification System | Classification Symbols |
|---|---|
| IPC | C01B33/24, C04B28/18, D01F9/08 |

Documentation Searched other than Minimum Documentation
to the Extent that such Documents are Included in the Fields Searched 5

## III. DOCUMENTS CONSIDERED TO BE RELEVANT 14

| Category * | Citation of Document, 16 with indication, where appropriate, of the relevant passages 17 | Relevant to Claim No. 18 |
|---|---|---|
| Y | JP, A, 48-84800 (Unitika Ltd.) 10 November 1973 (10. 11. 73) Page 3, lower right part, line 7 to page 4, upper left part, line 20 (Family: none) | 1-5, 7-11 |
| Y | JP, A, 49-5900 (Onoda Chemical Industry Co., Ltd.) 19 January 1974 (19. 01. 74) Page 4, lower right part, line 2 to page 5, upper right part, line 2 (Family: none) | 1-12 |
| A | JP, B1, 45-25771 (Osaka Packing Mfg. Co., Ltd.) 26 August 1970 (26. 08. 70) Column 6, line 16 to column 6, line 25, column 7, line 39 to column 8, line 44, column 9, line 13 to column 10, line 17, column 11, line 12 to column 12, line 19 (Family: none) | 1-3, 5, 7-10, 12, 14 |

* Special categories of cited documents: 15

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure. use. exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search 2 | Date of Mailing of this International Search Report 2 |
|---|---|
| July 10, 1987 (10. 07. 87) | July 27, 1987 (27. 07. 87) |
| International Searching Authority 1 | Signature of Authorized Officer 20 |
| Japanese Patent Office | |

Form PCT/ISA/210 (second sheet) (October 1977)

**FURTHER INFORMATION CONTINUED FROM THE SECOND SHEET**

| | | |
|---|---|---|
| A | JP, B1, 46-22737 (Osaka Packing Mfg. Co., Ltd.) 29 June 1971 (29. 06. 71) Column 4, line 42 to column 5, line 6 (Family: none) | 1-3, 5, 7-10, 12, 14 |
| A | JP, A, 48-96498 (Mizoguchi Tadashi) 10 December 1973 (10. 12. 73) Page 3, lower right part, line 7 to page 4, lower left part, line 17 (Family: none) | 1-3, 5, 7-10, 12 |

**V.☐ OBSERVATIONS WHERE CERTAIN CLAIMS WERE FOUND UNSEARCHABLE[10]**

This international search report has not been established in respect of certain claims under Article 17(2) (a) for the following reasons:

1.☐ Claim numbers_____ because they relate to subject matter[12] not required to be searched by this Authority, namely:

2.☐ Claim numbers_____ because they relate to parts of the international application that do not comply with the prescribed requirements to such an extent that no meaningful international search can be carried out[13], specifically:

**VI.☐ OBSERVATIONS WHERE UNITY OF INVENTION IS LACKING[11]**

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

| FURTHER INFORMATION CONTINUED FROM THE SECOND SHEET | | |
|---|---|---|
| A | JP, A, 58-176118 (NGK Spark Plug Co., Ltd.) 15 October 1983 (15. 10. 83) Page 5, upper right part, line 9 to page 5, line 18 (Family: none) | 1-5, 7-10, 12 |

**V.☐ OBSERVATIONS WHERE CERTAIN CLAIMS WERE FOUND UNSEARCHABLE¹⁰**

This international search report has not been established in respect of certain claims under Article 17(2) (a) for the following reasons:

1.☐ Claim numbers_____ because they relate to subject matter¹² not required to be searched by this Authority, namely:

2.☐ Claim numbers_____ because they relate to parts of the international application that do not comply with the prescribed requirements to such an extent that no meaningful international search can be carried out¹³, specifically:

**VI.☐ OBSERVATIONS WHERE UNITY OF INVENTION IS LACKING¹¹**

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest
☐ The additional search fees were accompanied by applicant's protest.
☐ No protest accompanied the payment of additional search fees.

Form PCT/ISA/210 (supplemental sheet (2)) (October 1981)